# FASCICULE DE BREVET EUROPEEN

(11) **EP 1 445 533 B1**
(45) Date de publication et mention de la délivrance du brevet: **10.12.2014**
(21) Numéro de dépôt: 04290248.6
(22) Date de dépôt: 30.01.2004
(51) Int. Cl.: F21V 19/00, F21V 23/02, H01R 33/76

(54) **Dispositif d'éclairage/signalisation équipé d'un module complémentaire encastrable pour véhicule automobile**
Beleuchtungs- oder Signalisierungsvorrichtung für Kraftfahrzeug mit Einbau-Zusatzmodul
Lighting or signalling device for motor vehicle with built-in complementary module

(30) Priorité: 04.02.2003 FR 0301570
(43) Date de publication de la demande: 11.08.2004
(73) Titulaire: VALEO VISION, 93012 Bobigny Cedex (FR)
(72) Inventeur: Duarte, Marc, 93250 Villemomble (FR); Nicolai, Jean-Marc, 92400 Courbevoie (FR); Myotte, David, 93360 Neuilly Plaisance (FR)
(74) Mandataire: Schaffner, Jean

(56) Documents cités:
- EP-A- 1 136 749
- DE-A1- 19 504 112
- ES-U- 1 052 605
- GB-A- 2 297 148

## Description

La présente invention a pour objet un dispositif d'éclairage/signalisation, destiné essentiellement aux véhicules automobiles, ledit dispositif projecteur étant composé notamment d'un élément éclairant assemblé avec un module complémentaire encastrable se présentant sous la forme d'un boîtier. Le module complémentaire comporte un ensemble d'éléments électriques et/ou électroniques et/ou mécaniques destinés directement au fonctionnement du projecteur ou au fonctionnement de fonctions accessoires et/ou complexes associées au projecteur.

L'invention a essentiellement pour but de proposer une solution particulière dans la réalisation des contacts électriques entre l'élément éclairant et le module complémentaire; cette solution présente des avantages notamment en terme de facilité d'assemblage de l'élément éclairant avec le module complémentaire, et accessoirement en terme d'encombrement du module complémentaire lorsqu'il est assemblé avec l'élément éclairant, ou encore de simplicité des moules utilisés dans la réalisation de l'élément éclairant.

Le domaine de l'invention est, d'une façon générale, celui des projecteurs de véhicule automobile. Dans ce domaine, on connaît différents types de projecteurs, parmi lesquels on trouve essentiellement :
- des feux de position, d'intensité et de portée faible ;
- des feux de croisement, ou codes, d'intensité plus forte et de portée sur la route avoisinant 70 mètres, qui sont utilisés essentiellement la nuit et dont la répartition du faisceau lumineux est telle qu'elle permet de ne pas éblouir le conducteur d'un véhicule croisé ;
- des feux de route longue portée, et des feux de complément de type longue portée, dont la zone de vision sur la route avoisine 200 mètres, et qui doivent être éteints lorsque l'on croise un autre véhicule afin de ne pas éblouir son conducteur ;
- des projecteurs perfectionnés, dits bimodes, qui cumulent les fonctions de feux de croisement et de feu de route en incorporant un cache amovible ;
- des feux anti-brouillard.

L'association, selon l'invention, entre un élément éclairant et un module complémentaire peut être effectuée avec l'un quelconque de ces projecteurs. Le module complémentaire peut en effet par exemple contenir une carte électronique de type carte LCS (Light Control System en anglais, pour système de contrôle de l'éclairage), qui sert à la gestion de la mise en oeuvre de fonctions dites complexes (FBL, DBL, DRL, Cordy...) pour le projecteur auquel cette carte électronique est associée. Le module complémentaire peut également comporter une carte de contrôle pour piloter un élément mécanique de type actionneur. L'invention sera néanmoins plus particulièrement décrite dans le cadre d'un dispositif projecteur de type feu de croisement avec un module complémentaire de type ballast.

Dans le contexte de l'invention, un ballast est un module complémentaire particulier contenu de préférence dans un dispositif projecteur de type feu de croisement utilisant comme source lumineuse une lampe à décharge. Plus particulièrement, dans l'invention, on fait référence aux ballasts à système Xénon, également appelés HID ( High Intensity Decharge en anglais, pour décharge de haute intensité), qui sont nécessaires pour créer et maintenir en vigueur un arc électrique utilisé dans les lampes à xénon. Un module électronique crée une haute tension au sein du ballast pour obtenir l'arc électrique au niveau de la source lumineuse utilisée. Dans ce type de projecteur, un module complémentaire de type ballast est donc indispensable pour fournir l'énergie nécessaire au bon fonctionnement du projecteur.

Cependant, l'intégration d'un tel module au sein du dispositif projecteur doit se faire en respectant un ensemble de contraintes :
- elle doit se faire au moyen d'une opération d'assemblage aussi simple que possible ;
- elle doit être peu encombrante;
- afin d'éviter tout endommagement des éléments contenus dans le ballast, elle doit tenir compte des fortes températures qui peuvent apparaître lors du fonctionnement du dispositif projecteur ;
- elle doit prendre en compte la nécessité des transmissions de signaux électriques entre les différents éléments du dispositif projecteur ;
- l'association entre l'élément éclairant et le module complémentaire ne doit pas entraîner de problèmes d'étanchéité pour l'une quelconque de ces pièces.

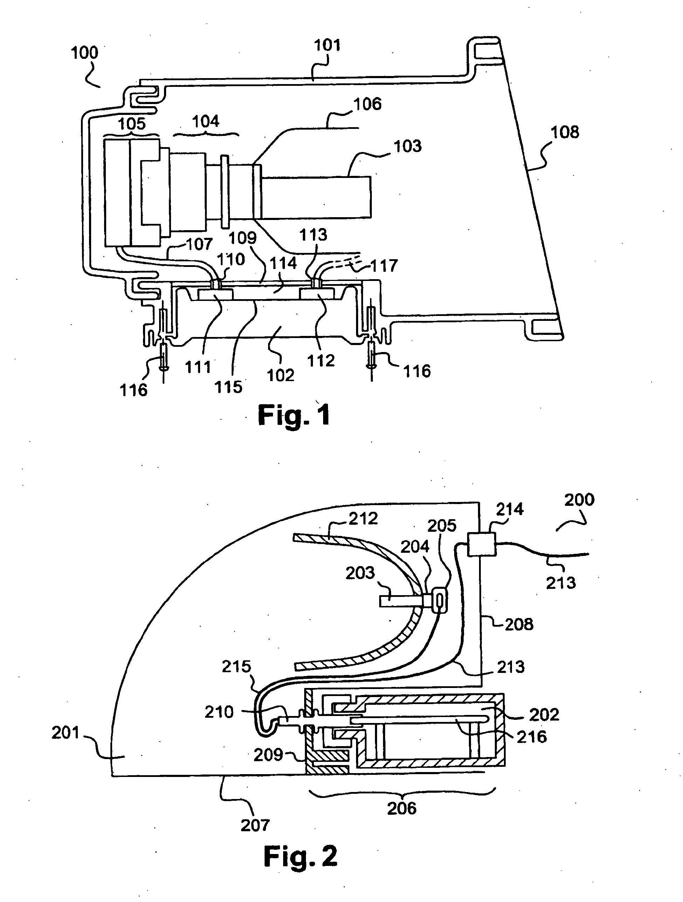

Dans l'état de la technique, on a proposé notamment un dispositif projecteur qui tente de respecter ces différentes contraintes. Un tel dispositif projecteur est illustré de façon schématique à la figure 1.

Sur cette figure, un dispositif projecteur 100 est essentiellement composé d'un élément éclairant 101 et d'un ballast 102 de type système Xénon. Dans l'élément éclairant 101, on trouve notamment un réflecteur 106 dans lequel on a placé une source lumineuse 103, de type lampe à décharge. La source lumineuse 103 produit un faisceau lumineux qui sort de l'élément éclairant 101 au niveau d'une surface de sortie 108, qui constitue la partie avant de l'élément éclairant 101. La source lumineuse 103, qui repose sur un élément porte-lampe 104, est connectée à un module haute tension 105 servant à l'alimenter

Le module haute tension est alimenté au moyen d'un première liaison électrique 107, constituant un faisceau de sortie, qui est de préférence blindée et qui sort de l'élément éclairant 101 au niveau d'une première ouverture, ménagée dans une face inférieure 109 de l'élément éclairant 101, dans laquelle on a disposé une première contre-partie 110 de connecteur. Cette première contre-partie 110 est destinée à recevoir un premier connecteur 111 du ballast 102. Ce dernier comporte un deuxième connecteur 112, associé à une deuxième contre-partie 113 de connecteur disposée au niveau d'une deuxième ouverture ménagée dans la face inférieure 109 de l'élément éclairant 101. Une deuxième liaison électrique 117, constituant un faisceau d'entrée, est reliée au deuxième connecteur 112; elle permet d'acheminer différents signaux électriques, notamment un signal d'alimentation du ballast et différents signaux de contrôle provenant du véhicule.

La solidarisation entre le ballast 102 et l'élément éclairant 101 s'effectue entre la face inférieure 109 de l'élément éclairant 101 et une face supérieure 115 du ballast 102, au niveau d'un évidement 114 ménagé dans au moins une partie de la face inférieure et de la face arrière de l'élément éclairant 101, c'est à dire approximativement sous l'ensemble constitué par le réflecteur 106, l'élément porte-lampe 104 et le module haute tension 105. Le ballast 102 est fixé sur l'élément éclairant 101 au moyen d'au moins deux vis 116 qui viennent se disposer verticalement dans des ouvertures prévues à cet effet.

Le choix de la disposition du ballast 102 s'effectue notamment en considérant la zone la moins chaude du dispositif projecteur. Généralement, cette zone correspond à la zone située sous l'élément réflecteur 101, qui par ailleurs est assez accessible et facilite en conséquence le montage: c'est à cet endroit que la chaleur produite par la source de lumière 103 est la moins importante, et la partie inférieure de l'élément éclairant 101 est plus facile d'accès que, par exemple, la partie arrière.

L'assemblage entre l'élément éclairant et le module complémentaire tel qu'il vient d'être décrit comporte un certain nombre d'inconvénients :

Tout d'abord, le fait que les contre-parties de connecteur 110 et 113 soient disposées verticalement sur la face arrière 109 de l'élément éclairant 101 pose un premier problème : en effet, le moule qui sert à fabriquer l'élément éclairant 101 s'ouvre selon une direction horizontale, et la nécessité de pouvoir disposer des contre-parties de connecteur verticales impose la présence de tiroirs dans le moule utilisé. Ce moule étant utilisé pour l'ensemble des éléments projecteurs, y compris ceux fonctionnant avec une source lumineuse de type halogène, ce désavantage, en plus d'être pénalisant en terme de complexité dans la réalisation du moule, augmente inutilement le coût de l'ensemble des éléments projecteurs.

La présence de deux connecteurs est également un problème en soi ; en effet, plus le nombre de connecteurs est important, plus le montage est délicat et long à réaliser.

Un troisième problème rencontré avec les dispositifs projecteurs de l'état de la technique lorsqu'ils sont associés avec un module complémentaire est qu'ils sont relativement encombrants, le module complémentaire 102 ayant une hauteur importante du fait de sa propre conception.

Un quatrième problème rencontré avec les dispositifs projecteurs de l'état de la technique lorsqu'ils sont associés avec un module complémentaire réside dans la complexité de l'opération de montage, notamment en raison des moyens de fixation utilisés: dans l'état de la technique décrit, on doit utiliser au moins deux vis pour solidariser l'élément éclairant 101 et le ballast 102. Plus le nombre de vis est limité, meilleure est la durée et la simplicité de montage.

Un dispositif selon le préambule de la revendication 1 est connu du document EP 1 136 749 A.

Le dispositif selon l'invention répond aux problèmes qui viennent d'être exposés. D'une façon générale, on propose dans l'invention un élément éclairant associé avec un module complémentaire qui présente une grande facilité d'assemblage par rapport à ceux de l'état de la technique, notamment en réduisant le nombre d'éléments intervenant pour connecter électriquement le module complémentaire et l'élément éclairant, et qui, dans certains exemples de réalisation, supprime la nécessité de prévoir des tiroirs, pour placer les contre-parties de connecteur, dans le moule de fabrication de l'élément éclairant.

Dans l'invention, on prévoit par ailleurs une organisation différente des liaisons électriques qui permet de n'utiliser désormais qu'une unique contre-partie de connecteur sur l'élément éclairant. De plus, on peut prévoir une disposition du module complémentaire qui permet de limiter l'augmentation du volume global du dispositif projecteur, notamment dans le sens de la hauteur, tout en améliorant son étanchéité. Enfin, on limite le nombre de moyens de fixation.

A cet effet, dans l'invention, on propose une solution différente de celle décrite à la figure 1 pour assurer la connexion entre le dispositif projecteur et le module complémentaire. Dans l'invention, des zones de contact électrique sont disposées à la superficie d'une carte électronique du module complémentaire, de telle sorte qu'aucun connecteur n'est plus nécessaire sur le module complémentaire. On prévoit également d'adapter en conséquence la contre-partie de connecteur attachée à l'élément éclairant, notamment en équipant ce dernier de éléments de connectique destinés à entrer en contact avec les différentes zones de contact superficielles du module complémentaire lorsque ce dernier est solidarisé avec l'élément éclairant, et prêt au fonctionnement.

Dans un exemple particulier de réalisation du dispositif selon l'invention, on réalise un évidement sous le réflecteur et une organisation des différents éléments du dispositif tels que le module complémentaire ne dépasse plus ou dépasse un minimum hors de l'évidement, au moins dans le sens de la hauteur. On prévoit par ailleurs de réaliser la solidarisation du module complémentaire avec l'élément éclairant au moyen d'un élément unique de fixation, par exemple une vis disposée au niveau d'un plan de contact défini par une face avant du module complémentaire et une paroi latérale de l'évidement. C'est au niveau de ce plan de contact que la contre-partie de connecteur entre en contact avec les zones de contact de la carte électronique du module complémentaire.

L'invention concerne donc essentiellement un dispositif d'éclairage/signalisation selon la revendication 1.

Le dispositif projecteur selon l'invention peut présenter une ou plusieurs des caractéristiques secondaires suivantes :
- les zones de contact électrique sont réparties sur au moins deux faces du module complémentaire.
- les zones de contact électrique sont disposées sur une unique face du module complémentaire.
- la contre-partie de connecteur comporte une ouverture, dans laquelle la carte électronique vient s'encastrer/s'insérer, et dans laquelle est disposé l'ensemble des éléments de connectique.
- les zones de contact électrique sont réparties en un premier ensemble de zones de contact électrique, disposées sur une première face de la carte électronique, et un deuxième ensemble de zones de contact électrique, disposées sur une deuxième face de la carte électronique, chaque zone de contact du premier ensemble étant relié électriquement à une zone de contact du deuxième ensemble.
- le dispositif projecteur comporte des moyens coopérant pour centrer l'ensemble des zones de contact par rapport à l'ensemble des éléments de connectique lorsque la carte électronique vient s'encastrer dans la contre-partie.
- le module complémentaire est un ballast de type système à Xénon - ou HID- ou un module comprenant une carte électronique gérant au moins une fonction associée à l'élément éclairant.
- le dispositif projecteur comporte un évidement ménagé dans au moins une partie de la face inférieure et une partie de la face arrière de l'élément éclairant, la contre-partie de connecteur étant disposée dans une ouverture ménagée dans la face arrière de l'élément éclairant, au niveau de l'évidement.
- le dispositif projecteur comporte un premier moyen d'étanchéité du type joint disposé dans l'évidement pour venir envelopper une extrémité de connexion du module complémentaire et rendre ainsi étanche le dispositif projecteur.
- le premier joint est du type joint à lèvre ou joint de compression.
- le dispositif projecteur comporte un deuxième moyen d'étanchéité du type joint disposé dans l'évidement pour venir envelopper partiellement la contre-partie du connecteur et rendre ainsi étanche une jonction entre la contre-partie de connecteur et le module complémentaire.
- le dispositif projecteur comporte un troisième moyen d'étanchéité du type joint disposé entre un drain thermique, constituant une partie inférieure du module complémentaire, et un capot du module complémentaire.
- le dispositif projecteur comporte une entrée d'alimentation unique pour recevoir un ensemble de signaux depuis l'extérieur du dispositif projecteur, lesdits signaux étant transmis, via une première liaison conductrice, à la contre-partie de connecteur, une deuxième liaison conductrice interne à l'élément éclairant assurant la transmission de signaux entre la contre-partie de connecteur et un module haute tension associé à la source lumineuse.
- le dispositif projecteur comporte deux paires d'éléments d'assemblage.
- chaque glissière de guidage est disposée sur l'élément éclairant et chaque élément protubérant d'une paire d'éléments d'assemblage est disposé sur le module complémentaire.
- les glissières de guidage sont disposées sur des parois de l'élément éclairant qui définissent l'évidement.

Selon une variante, l'insertion de la carte telle que mentionnée plus haut est réversible : la carte est amovible. Cette caractéristique est avantageuse, car elle permet de remplacer aisément les cartes défectueuses par exemple.

On prévoit avantageusement des moyens élastiques entre la contre-partie de connecteur et le module complémentaire et/ou le dispositif éclairant. Leur fonction est, notamment par leur forme et leur élasticité, de compenser les jeux qui peuvent exister entre ces différents éléments, de bloquer tout mouvement relatif entre ceux-ci.

Un autre objet de l'invention est un véhicule automobile équipé d'un dispositif projecteur, comportant un module complémentaire, incluant les caractéristiques principales qui ont été précisées, avec éventuellement au moins une des caractéristiques qui viennent d'être mentionnées.

L'invention et ses différentes applications seront mieux comprises à la lecture de la description qui suit et à l'examen des figures qui l'accompagnent. Celles-ci ne sont présentées qu'à titre indicatif et nullement limitatif de l'invention. Les figures montrent :
- à la figure 1, déjà décrite, une représentation d'une association entre un dispositif projecteur et un module complémentaire dans l'état de la technique ;
- à la figure 2, une représentation schématique d'une vue en coupe et de face d'une association entre un dispositif projecteur et un module complémentaire selon l'invention;
- à la figure 3, une représentation schématique de l'assemblage, selon un premier mode de réalisation de l'invention, entre le dispositif projecteur et le module complémentaire ;
- à la figure 4, une représentation schématique de l'assemblage, selon un deuxième mode de réalisation de l'invention, entre le dispositif projecteur et le module complémentaire ;
- à la figure 5, une représentation partielle, en perspective, d'un exemple de réalisation de la carte électronique intervenant dans le dispositif selon l'invention ;
- à la figure 6, une représentation plus détaillée des différents éléments intervenant dans la solidarisation entre le dispositif projecteur et le module complémentaire avec un montage de la contre-partie de connecteur sur l'élément éclairant ne faisant pas partie de l'invention;
- à la figure 7, une représentation schématique d'une vue en coupe et de gauche d'une association entre un dispositif projecteur et un module complémentaire selon l'invention;
- à la figure 8, une représentation schématique en perspective d'une partie du dispositif selon l'invention.

Sur les différentes figures, les éléments qui sont communs à plusieurs figures auront conservé les mêmes références.

La figure 2 montre un dispositif 200 selon l'invention en section verticale, qui est composé notamment d'un élément éclairant 201 et d'un module complémentaire 202 de type ballast HID, qui peut notamment comporter une carte de contrôle électronique 216. Comme dans l'état de la technique, on trouve, dans l'élément éclairant 201, notamment un réflecteur 212 dans lequel on a placé une source lumineuse 203, de type lampe à décharge. Par réflecteur, on désigne une surface réfléchissante capable de renvoyer des signaux lumineux qui la rencontrent. La source lumineuse 203 produit un faisceau lumineux qui sort de l'élément éclairant 201 au niveau d'une surface de sortie 208, qui constitue la partie avant de l'élément éclairant 201. La source lumineuse 203, qui repose sur un élément porte-lampe 204, est connectée à un module haute tension 205 servant à l'alimenter.

Un évidement 206 est ménagé dans au moins une partie d'une surface inférieure 207 et une partie 209 d'une surface arrière 208 de l'élément éclairant 201, les orientations de ces surfaces étant définies en considérant le dispositif projecteur dans une position de fonctionnement habituel sur un véhicule automobile, la surface de sortie du faisceau lumineux constituant la face avant de l'élément éclairant. L'évidement 206 est de forme sensiblement parallélépipédique dans l'exemple décrit, mais sa forme pourrait être différente dans d'autres modes de réalisation de l'invention. Dans le dispositif projecteur 200, on a cherché à limiter l'encombrement lié à l'ajout du module complémentaire de type ballast 202. Deux solutions sont proposées, chacune des deux solutions pouvant éventuellement être mise en oeuvre seule ou associée à l'autre solution selon différents modes de réalisation du dispositif projecteur 200.

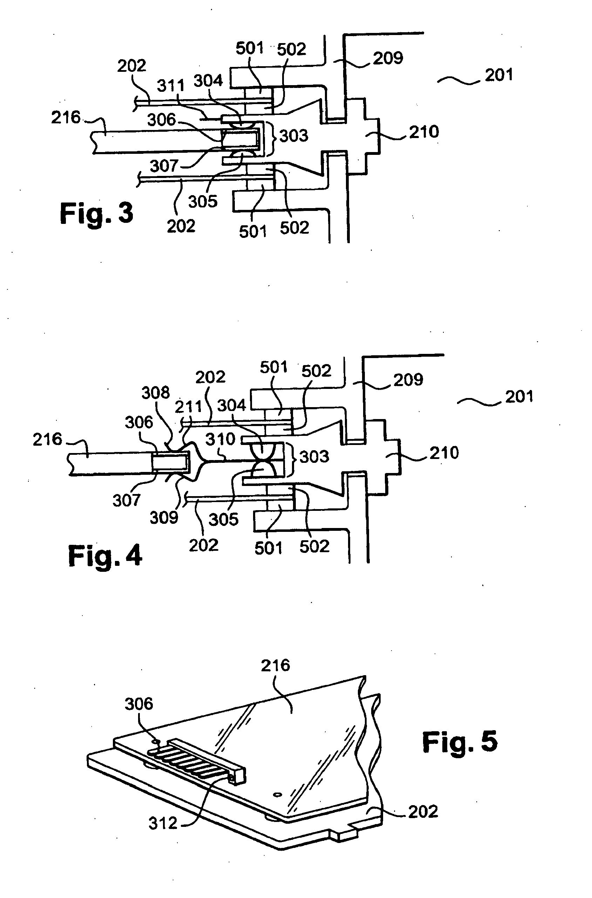

La première solution consiste à disposer, par exemple par clipsage et avec un peu de jeu, une contre-partie 210 de connecteur sur la partie arrière 209 de l'élément éclairant 201 qui se situe au niveau de l'évidement 206. La jonction de la contre partie de connecteur 210 avec une zone de contact appropriée du module complémentaire peut ainsi se faire selon un plan vertical, dit plan de contact ou plan de jonction, c'est à dire en déplaçant le ballast 202 selon une direction horizontale vers l'élément éclairant 201, et non plus une direction verticale comme c'était le cas dans l'exemple décrit à la figure 1. Cette jonction sera plus particulièrement détaillée aux figures 3 et 4. Ainsi, l'encombrement dans le sens de la hauteur, qui était auparavant du à la présence de plusieurs contre-parties de connecteur et de connecteurs dans un plan de jonction horizontal, a disparu. Avec une telle nouvelle disposition, la hauteur globale d'un dispositif projecteur comportant un module complémentaire diminue avantageusement.

Une légère augmentation de la largeur du dispositif pourrait alors cependant être constatée. C'est pourquoi dans l'invention, on propose une deuxième solution, éventuellement complémentaire de la première solution, selon laquelle l'évidement 206 est légèrement prolongé horizontalement, c'est à dire qu'il avance un peu plus sous le réflecteur 212. En effet, s'il n'est pas possible d'augmenter la taille de l'évidement dans le sens de la hauteur, sous peine de trop approcher le réflecteur 212, rien n'empêche de le prolonger dans le sens de la longueur pour le rendre plus profond.

De plus, le fait de disposer désormais d'un plan de contact vertical permet d'améliorer la jonction en terme d'étanchéité ; en effet, de l'eau formée par condensation au sein de l'élément éclairant 201 peut éventuellement s'infiltrer le long d'une jonction horizontale, mais pas le long d'une jonction verticale. Dans les exemples qui viennent d'être décrits, on peut supprimer le jeu entre la contre-partie 210 et la partie 209 de la face arrière, par exemple en utilisant un élément souple, par exemple un joint, solidaire du ballast 202.

Par ailleurs, dans l'invention, on propose une organisation de différentes liaisons électriques conductrices qui permet de se limiter à la présence d'une unique contre-partie 210 de connecteur. En effet, on prévoit une première liaison électrique 213, constituant un faisceau d'entrée, qui transporte, depuis l'extérieur du dispositif projecteur 200 jusqu'à la contre-partie de connecteur 210, un ensemble de signaux d'alimentation et de contrôle. Cette première liaison électrique 213 entre dans l'élément éclairant 201 au niveau d'une ouverture 214 pour aller se connecter sur la contre-partie 210. Une dérivation au niveau de la contre-partie 210 permet d'obtenir une deuxième liaison électrique, sous la forme d'un faisceau de sortie, qui permet d'alimenter la source lumineuse 203.

Il est à présent essentiellement fait référence aux figures 3 et 4 qui montrent deux exemples de réalisation de connexion électrique entre le module complémentaire 202 et le dispositif projecteur 201. Sur ces deux figures, on voit que la contre-partie 210 de connecteur est fixée de manière flottante sur la partie 209 de la surface arrière 208 de l'élément éclairant 201. Un premier joint 501 et un deuxième joint 502 sont disposés entre la partie arrière 209 et la contre-partie 210. Le rôle du premier joint 501 et du deuxième joint 502 sera précisé ultérieurement. Une extrémité, accessible depuis l'extérieur de l'élément éclairant 201, comporte une ouverture 303. Dans une partie supérieure de l'ouverture 303, on a disposé un premier ensemble 304 de éléments de connectique, et dans une partie inférieure de l'ouverture 303, on a disposé un deuxième ensemble 305 de éléments de connectique. Un élément de connectique est un élément de connexion électrique composé d'un ou plusieurs éléments conducteurs, de type patte métallique, légèrement déformable pour laisser glisser sans trop de résistance un support, comportant un ensemble de zones de contact, dans une ouverture dans laquelle ledit élément de connectique est disposé ; la déformation du élément de connectique est élastique de telle sorte qu'il demeure appuyé sur la zone du support au niveau de laquelle il se trouve, ladite zone correspondant de préférence à une zone de contact du support.

L'ouverture 303 est destinée à recevoir une extrémité de !a carte électronique 216. Sur cette extrémité, on a, selon l'invention, disposé au moins un ensemble de zones de contact électrique. Pour les exemples illustrés, un premier ensemble de zones de contact 306 et un deuxième ensemble de zones de contact 307 sont représentés, respectivement sur une partie supérieure et sur une partie inférieure de la carte électronique 216. Les figures 3 et 4 étant des vues en coupe, elles ne montrent qu'un unique élément de connectique et qu'une unique zone de contact des ensembles auxquels ils appartiennent. Dans l'invention, les ensembles de éléments de connectique sont en fait constitués d'une juxtaposition de éléments de connectique identiques, ou de type différent, disposés dans l'alignement du élément de connectique visible, parallèlement au plan visible aux figures 3 et 4. De la même façon, les ensembles de zones de contacts sont constitués d'une juxtaposition de zones de contact, de préférence identiques, disposées dans l'alignement de la zone de contact visible, parallèlement au plan visible aux figures 3 et 4. Le premier ensemble de zones de contact 306, disposé sur la partie supérieure de la carte électronique 216, est apparent à la figure 5.

Selon l'invention, les différentes zones de contact 306 et 307 sont disposées directement sur la carte électronique 216, c'est à dire que les contacts électriques sont mis à nu sur la superficie de la carte électronique 216. Dans certains modes de réalisation, ils peuvent être intégrés dans l'épaisseur initiale de la carte électronique, à la manière des plages de contact d'une puce dans une carte à puce. Ainsi, lorsque la carte électronique 216 est encastrée dans l'ouverture 303 de la contre-partie 210, les éléments de connectique sont directement en contact avec les différentes zones de contact. De préférence, la relation entre les éléments de connectique et les zones de contact est bijective, c'est à dire que chaque zone de contact est touchée par un unique élément de connectique.

Dans un exemple particulier de réalisation, chaque première zone de contact du premier ensemble 306 de zones de contact est reliée électriquement à une deuxième zone de contact du deuxième ensemble 307 de zones de contact, la première zone de contact et la deuxième zone de contact étant de préférence situées l'une au-dessus de l'autre. La liaison électrique entre deux zones de contact électriquement reliées est assurée par des via, ou pontages, internes à la carte électronique 216. Dans un tel cas de figure, une configuration similaire est prévue pour les ensembles de éléments de connectique, où chaque premier élément de connectique du premier ensemble de éléments de connectique 304 est relié électriquement à un deuxième élément de connectique du deuxième ensemble 305 de éléments de connectique, le premier élément de connectique et le deuxième élément de connectique étant de préférence situés l'un au-dessus de l'autre. Une telle réalisation assure une bonne qualité de connexion électrique entre les éléments de connectique et les zones de contact.

Comme illustré à la figure 4, la liaison électrique entre chaque zone de contact et le élément de connectique auquel elle est associée peut s'effectuer au moyen d'une pièce intermédiaire 211, électriquement conductrice, composée par exemple d'un premier ensemble de pattes de contact 308 et d'un deuxième ensemble de pattes de contact 309, les pattes de contact d'un même ensemble étant disposées dans l'alignement de la patte de contact visible, parallèlement au plan visible à la figure 5. On prévoit une patte de contact par zone de contact. Les deux ensembles de pattes se rejoignent au niveau d'une tige de maintien 310 qui est destinée à être insérée entre le premier ensemble de éléments de connectique 304 et le deuxième ensemble de éléments de connectique 305 de façon à assurer le contact électrique entre les zones de contact et les éléments de connectique appropriés.

Des moyens coopérant pour centrer l'ensemble des zones de contact par rapport à l'ensemble des éléments de connectique lorsque la carte électronique vient s'encastrer dans la contre-partie sont prévus dans l'invention. De tels moyens peuvent notamment faire intervenir un ou plusieurs pions de guidage 311 sur la contre-partie 210 destinés à venir s'emboîter dans une ouverture appropriée 312, visible à la figure 5.

Dans d'autres exemples de réalisation, on prévoit dans l'invention de ne disposer qu'un unique ensemble de éléments de connectique et/ou de zones de contact, par exemple sur une unique face de la carte électronique 216.

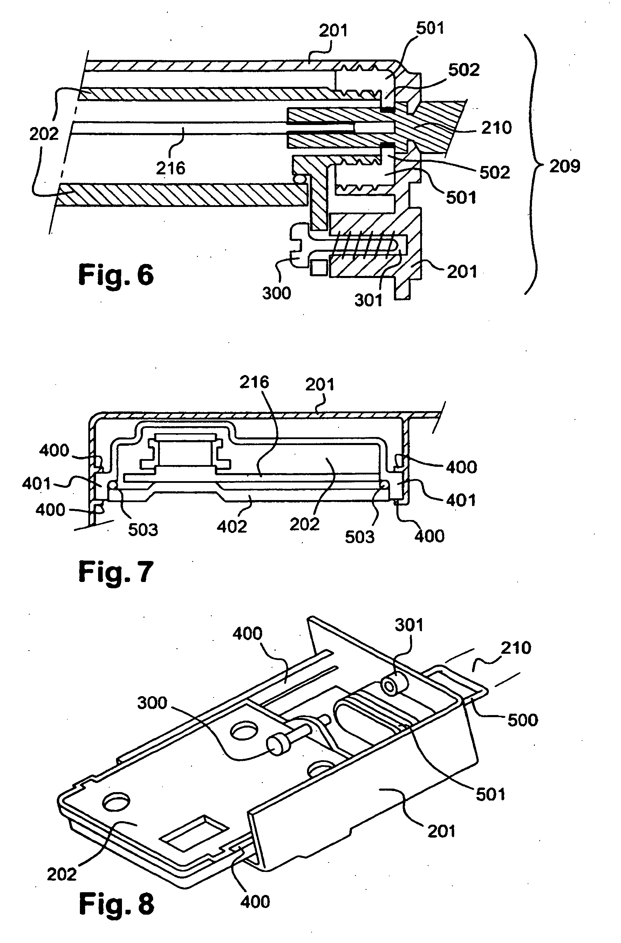

Il est à présent essentiellement fait référence aux figures 6, 7 et 8, qui permettent d'illustrer notamment les différents éléments intervenant dans la solidarisation entre le ballast 202 et l'élément éclairant 201.

A la figure 6, outre différents éléments déjà présents à la figure 1, on a représenté une vis 300, de préférence auto-taraudeuse, qui, après avoir été introduite dans un élément de fixation situé sur la partie inférieure du ballast 202, est insérée dans la partie 209 de la face arrière, au niveau de l'évidement 206, de l'élément éclairant 201 (représenté en traits hachurés) et la partie latérale du ballast 202 (représenté en grisé) servant de plan de jonction. La jonction constituée par la vis 300 et l'alésage fileté 301 est de préférence disposée de façon centrée en largeur, comme c'est visible sur la figure 8. Elle est disposée sous la liaison qui est établie entre la contre-partie de connecteur 210 et l'ensemble de zones de contact. Dans un autre exemple de réalisation, la tête de la vis 300 vient directement, sans que la vis ne soit introduite dans un élément de fixation, appuyer sur une partie saillante du ballast 202 pour le maintenir sur l'élément éclairant 201.

Un dispositif d'auto-centrage de l'ensemble de éléments de connectique sur l'ensemble de zones de contact est prévu : il apparaît à la figure 8 sous la forme de deux pions de centrage 500 disposés sur le contre-partie 210 ; ces pions de centrage sont destinés à orienter correctement l'ensemble de zones de contact vers les éléments de connectique appropriés de la contre-partie 210 lorsque l'élément éclairant 201 et le ballast 202 s'emboîtent l'un dans l'autre. Dans d'autres exemples de réalisation, les pions de centrage peuvent être disposés sur le module complémentaire 202, ou être remplacés par des chanfreins disposés sur le ballast 202 et/ou l'élément éclairant 201.

Dans un autre exemple de réalisation, la vis 300 pourrait être remplacée par un autre moyen mécanique de fixation, par exemple un ressort de poussée qui serait disposé derrière le ballast 202 et qui exercerait sur lui une poussée horizontale pour maintenir opérationnelle la liaison entre l'ensemble de zones de contact et l'ensemble de éléments de connectique.

Selon l'invention, des rails de guidage 400, ou glissières, visibles aux figures 7 et 8, sont prévus sur l'élément éclairant 201 au niveau de l'évidement 206 . Ils sont destinés à guider, avec un minimum de jeu, le mouvement de translation horizontal du ballast 202 lorsqu'il est installé dans le dispositif 200, et ceci afin de faciliter le montage. Des décrochements 401, ou éléments protubérants, d'une taille adéquate pour rentrer dans les rails de guidage 400, sont prévus à cet effet sur les parois latérales du ballast 202. Les rails de guidage 400 jouent également un rôle de support du ballast 202 qui peut permettre l'utilisation d'une unique vis 300.

Selon l'invention, on peut prévoir une ou plusieurs paires d'éléments d'assemblage, chaque paire étant constituée d'une glissière de guidage 400 et d'un élément protubérant 401. Les glissières de guidage peuvent être disposées sur l'élément éclairant 201 ou sur le module complémentaire 202, l'élément protubérant associé, c'est à dire appartenant à la même paire d'éléments d'assemblage, étant alors disposé sur l'élément ne supportant pas la glissière de guidage 400. Selon les différents exemples de réalisation envisagés pour le dispositif selon l'invention, les glissières de guidage 400 peuvent être disposées sur une face quelconque de l'élément éclairant 201 ou du module complémentaire 202, éventuellement au niveau de l'évidement 206 lorsqu'il existe.

Lorsqu'un élément protubérant 401 glisse le long d'une glissière de guidage 400, il atteint une position de blocage, par exemple par butée mécanique, qui correspond à la position finale du module complémentaire, c'est à dire à sa position de mise en service. Dans l'invention, on prévoit que lorsque le module complémentaire atteint sa position de blocage, l'ensemble de zones de contact est correctement encastrée dans l'ensemble de éléments de connectique, c'est à dire que la butée mécanique et la connexion électrique s'effectuent au même moment. Afin que la connexion électrique s'effectue de façon satisfaisante, les différents moyens de centrage peuvent être disposés de façon à ce qu'ils agissent également à ce moment.

Dans un exemple qui ne fait pas partie de la présente invention, on dispose les glissières de guidage 400 à l'intérieur même de l'élément éclairant 201, le module complémentaire étant alors destiné à être contenu dans l'élément éclairant 201, ce qui présente un avantage en terme d'étanchéité du dispositif selon l'invention.

Selon une variante, les glissières de guidage 400 se rétrécissent progressivement, de façon à freiner par frottement puis à stopper, au niveau de la position de blocage, la progression des éléments protubérants 401. Les éléments protubérants 401 peuvent ainsi être bloqués dans les glissières de guidage 400, pouvant ainsi assurer le maintien du module complémentaire 202 sur l'élément éclairant 201 sans utiliser de moyens de fixation supplémentaires.

Afin d'assurer une parfaite étanchéité du dispositif selon l'invention, différents joints peuvent être présents :

Le premier joint 501, du type joint à lèvre, déjà visible aux figures 3 et 4, et qui apparaît aux figures 6 et 8, est disposé dans l'évidement 206 pour venir envelopper le ballast 202 au niveau de sa face avant, rendant ainsi étanche le dispositif projecteur 200 par rapport au monde extérieur. Le premier joint 501 peut se terminer par une membrane 502, visible par exemple à la figure 6, qui assure l'étanchéité entre le ballast 202 et la contre-partie de connecteur 210. Cette membrane 502 pourrait prendre la forme d'un deuxième joint, dissocié du premier joint 501, qui empêcherait toute infiltration de liquide entre le ballast 202 et l'élément éclairant 201 au niveau de la fixation avec jeu de la contre-partie 210 sur l'élément éclairant 201.

Un troisième joint 503, visible sur la figure 7, assure l'étanchéité du ballast 202 vis à vis de l'extérieur ; il est disposé au niveau d'une jonction entre un drain thermique 402 constituant la face inférieure du ballast 202 et les décrochements 401 prévus sur les parois latérales du ballast 202.

On peut aussi prévoir un moyen d'étanchéité de type joint entre la contre-partie (210) de connecteur et la liaison conductrice (215) représentée en figure 2.

Pour améliorer encore l'étanchéité, on prévoit l'ajout d'une pièce, par exemple en caoutchouc, qui entoure le morceau de contre-partie 210 qui se situe dans l'élément éclairant 201 et les liaisons électriques qui en sortent; la pièce en caoutchouc est, à une première extrémité, en contact avec la partie 209 de la face arrière de l'élément éclairant, et à une autre extrémité, orientée vers le bas.

## Revendications

1. Dispositif d'éclairage/signalisation (200) destiné à un véhicule automobile comportant un élément éclairant (201) comprenant au moins un réflecteur (212), une source lumineuse (203) et un boîtier comportant un ensemble de faces latérales dont une face arrière, une face inférieure, une face supérieure, **caractérisé en ce que** ledit dispositif d'éclairage comprend un module complémentaire (202) disposé à l'extérieur du boitier de l'élément éclairant (201) et auquel il est associé à l'aide d'au moins une paire d'éléments d'assemblage constituée par une glissière de guidage (400) et par un élément protubérant (401), l'élément protubérant (401) étant susceptible de s'insérer au moins à une extrémité de la glissière de guidage (400) à laquelle il est apparié, et de glisser dans cette glissière de guidage (400), chacun des éléments d'assemblage (400 ;401) d'une paire d'éléments d'assemblage étant disposé soit sur l'élément éclairant (201) soit sur un module complémentaire (202) destiné à être associé avec l'élément éclairant (201), les deux éléments d'assemblage d'une paire d'assemblage n'étant pas disposés ensemble sur l'élément éclairant (201) ou sur le module complémentaire (202), l'élément éclairant (201) comportant au moins une contre-partie (210) de connecteur disposée de manière flottante dans une ouverture ménagée dans la surface arrière (208) de l'élément éclairant (201), ladite contre-partie (210) de connecteur comportant un ensemble d'éléments de connectique (304 ;305) destinés à entrer en contact avec un ensemble de zones de contact électrique (306 ;307) dudit module complémentaire (202), chaque zone de contact électrique (306 ;307) étant disposée de telle sorte qu'elle est directement accessible, pour l'élément de connectique auquel elle est destinée, sur une partie superficielle d'une carte électronique (216) du module complémentaire (202), l'ensemble de zones de contact (306 ;307) et l'ensemble de éléments de connectique (304 ;305) entrant en contact quand au moins un élément protubérant (401) d'une paire d'assemblage est en bout de course dans la glissière de guidage (400) à laquelle il est associé.

2. Dispositif (200) selon la revendication précédente **caractérisé en ce que** les zones de contact électrique (306 ;307) sont réparties sur au moins deux faces du module complémentaire (202).

3. Dispositif (200) selon la revendication 1 **caractérisé en ce que** les zones de contact électrique (306) sont disposées sur une unique face du module complémentaire (202).

4. Dispositif (200) selon l'une des revendications précédentes **caractérisé en ce que** la contre-partie (210) de connecteur comporte une ouverture (303), dans laquelle la carte électronique (216) vient s'encastrer/s'insérer, et dans laquelle est disposé l'ensemble de éléments de connectique (304 ;305).

5. Dispositif (200) selon l'une des revendications précédentes, **caractérisé en ce que** sont prévus des moyens élastiques entre la contre-partie (210) de connecteur et le module complémentaire (202) et/ou le dispositif éclairant (201).

6. Dispositif (200) selon la revendication 4 et la revendication 2 **caractérisé en ce que** les zones de contact électrique (306 ;307) sont réparties en un premier ensemble (306) de zones de contact électrique, disposées sur une première face de la carte électronique (216), et un deuxième ensemble (307) de zones de contact électrique, disposées sur une deuxième face de la carte électronique (216), chaque zone de contact du premier ensemble de zones de contact (306) étant relié électriquement à une zone de contact du deuxième ensemble de zones de contact (307).

7. Dispositif (200) selon l'une au moins des revendications 4 à 6 **caractérisé en ce qu'**il comporte des moyens (311 ;312) coopérant pour centrer l'ensemble des zones de contact (306 ;307) par rapport à l'ensemble de éléments de connectique (304 ;305) lorsque la carte électronique (216) vient s'encastrer dans la contre-partie (210).

8. Dispositif (200) selon l'une des revendications précédentes **caractérisé en ce que** le module complémentaire (202) est un ballast de type système à xénon ou un module comprenant une carte électronique gérant au moins une fonction associée à l'élément éclairant (201).

9. Dispositif (200) selon l'une au moins des revendications précédentes **caractérisé en ce qu'**il comporte un évidement (206) ménagé dans au moins une partie de la face inférieure et une partie (209) de la face arrière de l'élément éclairant, la contre-partie (210) de connecteur étant disposée dans une ouverture ménagée dans la face arrière de l'élément éclairant, au niveau de l'évidement (206).

10. Dispositif selon la revendication précédente **caractérisé en ce qu'**il comporte un premier moyen d'étanchéité de type joint (501) disposé dans l'évidement (206) pour venir envelopper une extrémité de connexion du module complémentaire (202) et rendre ainsi étanche le dispositif éclairant (200).

11. Dispositif (200) selon l'une au moins des revendications 9 ou 10 **caractérisé en ce qu'**il comporte un deuxième moyen d'étanchéité de type joint (502) disposé dans l'évidement (206) pour venir envelopper partiellement la contre-partie (210) et rendre ainsi étanche une jonction entre la contre-partie de connecteur (210) et le module complémentaire (202).

12. Dispositif (200) selon l'une au moins des revendications 9 à 11 **caractérisé en ce qu'**il comporte un troisième moyen d'étanchéité de type joint (503) disposé entre un couvercle du module complémentaire (202), constituant une partie inférieure du module complémentaire (202), et un capot du module complémentaire (202).

13. Dispositif (200) selon l'une au moins des revendications précédentes **caractérisé en ce qu'**il comporte une entrée d'alimentation (214) unique pour recevoir un ensemble de signaux depuis l'extérieur du dispositif projecteur (200), lesdits signaux étant transmis, via une première liaison conductrice (213), à la contre-partie (210) de connecteur, une deuxième liaison conductrice (215) interne à l'élément éclairant (201) assurant la transmission de signaux entre la contre-partie (210) de connecteur et un module haute tension (205) associé à la source lumineuse (203).

14. Dispositif selon la revendication 13 **caractérisé en ce qu'**est prévu un moyen d'étanchéité de type joint entre la contre-partie (210) de connecteur et la liaison conductrice (215).

15. Dispositif (200) selon l'une des revendications précédentes **caractérisé en ce qu'**il comporte deux paires d'éléments d'assemblage (400 ;401).

16. Dispositif (200) selon l'une au moins des revendications précédentes **caractérisé en ce que** chaque glissière de guidage est disposée sur l'élément éclairant et **en ce que** chaque élément protubérant (401) d'une paire d'éléments d'assemblage est disposé sur le module complémentaire (401).

17. Dispositif (200) selon la revendication précédente et la revendication 9 **caractérisé en ce que** les glissières de guidage (400) sont disposées sur des parois de l'élément éclairant (201) qui définissent l'évidement (206).

## Patentansprüche

1. Beleuchtungs-/Signalgebungsvorrichtung (200) für ein Kraftfahrzeug mit einem Leuchtelement (201) mit wenigstens einem Reflektor (212), einer Lichtquelle (203) und einem eine Reihe von Seitenflächen aufweisenden Gehäuse, darunter eine Rückseite, eine Unterseite, eine Oberseite,
**dadurch gekennzeichnet, dass** die Beleuchtungsvorrichtung ein Zusatzmodul (202) umfasst, das außen am Gehäuse des Leuchtelements (201) angeordnet und dem es mittels wenigstens eines aus einer Führungsschiene (400) und einem vorspringenden Element (401) gebildeten Verbindungselementepaares zugeordnet ist, wobei das vorspringende Element (401) wenigstens an einem Ende der Führungsschiene (400), der es zugeordnet ist, einführbar ist und in dieser Führungsschiene (400) zu gleiten vermag, wobei jedes Verbindungselement (400; 401) eines Verbindungselementepaares entweder auf dem Leuchtelement (201) oder auf einem dem Leuchtelement (201) zuordenbaren Zusatzmodul (202) angeordnet ist, wobei die beiden Verbindungselemente eines Verbindungspaares nicht zusammen auf dem Leuchtelement (201) oder dem Zusatzmodul (202) angeordnet sind, wobei das Leuchtelement (201) wenigstens ein Verbindergegenstück (210) aufweist, das in einer in der Rückseite (208) des Leuchtelements (201) ausgebildeten Öffnung schwimmend gelagert angeordnet ist, wobei das Verbindergegenstück (210) einen Satz Anschlusselemente (304; 305) aufweist, die dazu bestimmt sind, mit einem Satz elektrischer Kontaktbereiche (306; 307) des Zusatzmoduls (202) in Kontakt zu gelangen, wobei jeder elektrische Kontaktbereich (306; 307) solchermaßen angeordnet ist, dass er für das Anschlusselement, für das er bestimmt ist, auf einem Oberflächenteil einer Platine (216) des Zusatzmoduls (202) direkt zugänglich ist, wobei der Kontaktbereichsatz (306; 307) und der Anschlusselementesatz (304; 305) miteinander in Kontakt gelangen, wenn sich wenigstens ein vorspringendes Element (401) eines Verbindungspaares in der Führungsschiene (400), der es zugeordnet ist, in der Endstellung befindet.

2. Vorrichtung (200) nach dem vorhergehenden Anspruch,
**dadurch gekennzeichnet, dass** die elektrischen Kontaktbereiche (306; 307) über wenigstens zwei Seiten des Zusatzmoduls (202) verteilt sind.

3. Vorrichtung (200) nach Anspruch 1,
**dadurch gekennzeichnet, dass** die elektrischen Kontaktbereiche (306) auf einer einzigen Seite des Zusatzmoduls (202) angeordnet sind.

4. Vorrichtung (200) nach einem der vorhergehenden Ansprüche,
**dadurch gekennzeichnet, dass** das Verbindergegenstück (210) eine Öffnung (303) aufweist, in der die Platine (216) eingesteckt/eingefügt ist, und in der der Anschlusselementesatz (304; 305) angeordnet ist.

5. Vorrichtung (200) nach einem der vorhergehenden Ansprüche,
**dadurch gekennzeichnet, dass** zwischen dem Verbindergegenstück (210) und dem Zusatzmodul (202) und/oder der Leuchtvorrichtung (201) elastische Mittel vorgesehen sind.

6. Vorrichtung (200) nach Anspruch 4 und Anspruch 2,
**dadurch gekennzeichnet, dass** die elektrischen Kontaktbereiche (306; 307) in einen ersten Satz (306) elektrischer Kontaktbereiche, die auf einer ersten Seite der Platine (216) angeordnet sind, und einen zweiten Satz (307) elektrischer Kontaktbereiche, die auf einer zweiten Seite der Platine (216) angeordnet sind, aufgeteilt sind, wobei jeder Kontaktbereich des ersten Kontaktbereichsatzes (306) elektrisch mit einem Kontaktbereich des zweiten Kontaktbereichsatzes (307) verbunden ist.

7. Vorrichtung (200) nach wenigstens einem der Ansprüche 4 bis 6,
**dadurch gekennzeichnet, dass** sie Mittel (311, 312) umfasst, die miteinander zusammenwirken, um den Kontaktbereichsatz (306; 307) bezüglich des Anschlusselementesatzes (304; 305) zu zentrieren, wenn die Platine (216) in das Gegenstück (210) eingesteckt wird.

8. Vorrichtung (200) nach einem der vorhergehenden Ansprüche,
**dadurch gekennzeichnet, dass** das Zusatzmodul (202) ein Vorschaltgerät vom Typ Xenonsystem oder ein eine elektronische Karte aufweisendes Modul ist, die wenigstens eine dem Leuchtelement (201) zugehörige Funktion managt.

9. Vorrichtung (200) nach wenigstens einem der vorhergehenden Ansprüche,
**dadurch gekennzeichnet, dass** sie eine Aussparung (206) aufweist, die in wenigstens einem Teil der Unterseite und einem Teil (209) der Rückseite des Leuchtelements ausgebildet ist, wobei das Verbindergegenstück (210) in einer Öffnung angeordnet ist, die in der Rückseite des Leuchtelements in Höhe der Aussparung (206) ausgebildet ist.

10. Vorrichtung nach dem vorhergehenden Anspruch,
**dadurch gekennzeichnet, dass** sie ein in der Aussparung (206) angeordnetes erstes Dichtmittel vom Typ Dichtung (501) aufweist, um ein Anschlussende des Zusatzmoduls (202) damit zu umgeben und auf diese Weise die Leuchtvorrichtung (200) abzudichten.

11. Vorrichtung (200) nach wenigstens einem der Ansprüche 9 oder 10,
**dadurch gekennzeichnet, dass** sie ein in der Aussparung (206) angeordnetes zweites Dichtmittel vom Typ Dichtung (502) aufweist, um das Gegenstück (210) damit teilweise zu umgeben und auf diese Weise eine Verbindung zwischen dem Verbindergegenstück (210) und dem Zusatzmodul (202) abzudichten.

12. Vorrichtung (200) nach wenigstens einem der Ansprüche 9 bis 11,
**dadurch gekennzeichnet, dass** sie ein drittes Dichtmittel vom Typ Dichtung (503) aufweist, das zwischen einem Deckel des Zusatzmoduls (202), der eine Unterseite des Zusatzmoduls (202) bildet, und einer Kappe des Zusatzmoduls (202) angeordnet ist.

13. Vorrichtung (200) nach wenigstens einem der vorhergehenden Ansprüche,
**dadurch gekennzeichnet, dass** sie einen einzigen Speiseeingang (214) aufweist, um eine Reihe von Signalen von außerhalb des Scheinwerfers (200) zu empfangen, wobei die Signale über eine erste Leitungsverbindung (213) an das Verbindergegenstück (210) übertragen werden, wobei eine zweite dem Leuchtelement (201) zugehörige Leitungsverbindung (215) die Signalübertragung zwischen dem Verbindergegenstück (210) und einem Hochspannungsmodul (205) gewährleistet.

14. Vorrichtung (200) nach Anspruch 13,
**dadurch gekennzeichnet, dass** zwischen dem Verbindergegenstück und der Leitungsverbindung (215) ein Dichtmittel vom Typ Dichtung vorgesehen ist.

15. Vorrichtung (200) nach einem der vorhergehenden Ansprüche,
**dadurch gekennzeichnet, dass** sie zwei Verbindungselementepaare (400; 401) aufweist.

16. Vorrichtung (200) nach wenigstens einem der vorhergehenden Ansprüche,
**dadurch gekennzeichnet, dass** jede Führungsschiene auf dem Leuchtelement angeordnet ist und dass jedes vorspringende Element (401) eines Verbindungselementepaares auf dem Zusatzmodul (401) angeordnet ist.

17. Vorrichtung (200) nach dem vorhergehenden Anspruch und Anspruch 9,
**dadurch gekennzeichnet, dass** die Führungsschienen (400) an Wänden des Leuchtelements (201), die die Aussparung (206) definieren, angeordnet sind.

## Claims

1. Lighting/signalling device (200) intended for a motor vehicle, including a lighting element (201) comprising at least a reflector (212), a light source (203) and a housing having a set of lateral faces including a rear face, a lower face and an upper face, **characterised in that** said lighting device comprises a complementary module (202) placed on the outside of the housing of the lighting element (201) and with which it is associated by means of at least a pair of assembly elements formed by a guiding slide (400) and a protruding element (401), the protruding element (401) being insertable at least at one end of the guiding slide (400) with which it is paired, and being slidable in this guiding slide (400), each of the assembly elements (400; 401) of a pair of assembly elements being placed either on the lighting element (201) or on a complementary module (202) intended to be associated with the lighting element (201), the two assembly elements of an assembly pair not being placed together on the lighting element (201) or on the complementary module (202), the lighting element (201) having at least one connector counterpart (210) placed in a floating manner in an opening formed in the rear surface (208) of the lighting element (201), said connector counterpart (210) having a set of connection elements (304; 305) intended to come into contact with a set of electrical contact areas (306; 307) of said complementary module (202), each electrical contact area (306; 307) being placed so as to be directly accessible, for the connection element for which it is intended, on a surface part of an electronic circuit card (216) of the complementary module (202), the set of contact areas (306; 307) and the set of connection elements (304; 305) coming into contact when at least one protruding element (401) of an assembly pair is at the end of its travel in the guiding slide (400) with which it is associated.

2. Device (200) according to the preceding claim, **characterised in that** the electrical contact areas (306; 307) are distributed on at least two faces of the complementary module (202).

3. Device (200) according to Claim 1, **characterised in that** the electrical contact areas (306) are placed on a single face of the complementary module (202).

4. Device (200) according to any of the preceding claims, **characterised in that** the connector counterpart (210) has an opening (303) into which the electronic circuit card (216) is fitted and/or inserted, and in which the set of connection elements (304; 305) is placed.

5. The device (200) according to any of the preceding claims, **characterised in that** resilient means are provided between the connector counterpart (210) and the complementary module (202) and/or the lighting device (201).

6. Device (200) according to Claim 4 and Claim 2, **characterised in that** the electrical contact areas (306; 307) are distributed in a first set (306) of electrical contact areas, placed on a first face of the electronic circuit card (216), and a second set (307) of electrical contact areas, placed on a second face of the electronic circuit card (216), each contact area of the first set of contact areas (306) being electrically connected to a contact area of the second set of contact areas (307).

7. Device (200) according to at least one of Claims 4 to 6, **characterised in that** it includes means (311; 312) which interact to centre the set of contact areas (306; 307) with respect to the set of connection elements (304; 305) when the electronic circuit card (216) is fitted in the counterpart (210).

8. Device (200) according to any of the preceding claims, **characterised in that** the complementary module (202) is a ballast of the xenon system type or a module comprising an electronic circuit card controlling at least one function associated with the lighting element (201).

9. Device (200) according to at least one of the preceding claims, **characterised in that** it includes a recess (206) formed in at least a part of the lower face and a part (209) of the rear face of the lighting element, the connector counterpart (210) being placed in an opening formed in the rear face of the lighting element, at the level of the recess (206).

10. Device according to the preceding claim, **characterised in that** it includes a first sealing means of the gasket type (501) placed in the recess (206) so as to enclose a connection end of the complementary module (202), thus sealing the lighting device (200).

11. Device (200) according to at least one of Claims 9 and 10, **characterised in that** it includes a second sealing means of the gasket type (502) placed in the recess (206) so as to partially enclose the counterpart (210), thus sealing a junction between the connector counterpart (210) and the complementary module (202).

12. Device (200) according to at least one of Claims 9 and 11, **characterised in that** it includes a third sealing means of the gasket type (503) placed between a cover of the complementary module (202), which forms a lower part of the complementary module (202), and a casing of the complementary module (202).

13. Device (200) according to at least one of the preceding claims, **characterised in that** it includes a single power supply input (214) for receiving a set of signals from outside the light device (200), said signals being transmitted via a first conducting link (213) to the connector counterpart (210), a second conducting link (215) inside the lighting element (201) enabling signals to be transmitted between the connector counterpart (210), and a high voltage module (205) associated with the light source (203).

14. Device according to Claim 13, **characterised in that** a sealing means of the gasket type is provided between the connector counterpart (210) and the conducting link (215).

15. Device (200) according to any of the preceding claims, **characterised in that** it comprises two pairs of assembly elements (400; 401).

16. Device (200) according to at least one of the preceding claims, **characterised in that** each guiding slide is placed on the lighting element and **in that** each protruding element (401) of a pair of assembly elements is placed on the complementary module (401).

17. Device (200) according to the preceding claim and Claim 9, **characterised in that** the guiding slides (400) are placed on walls of the lighting element (201) which form the recess (206).
